(19) Europäisches Patentamt
European Patent Office
Office européen des brevets

(11) **EP 2 216 998 A1**

(12) **EUROPEAN PATENT APPLICATION**

(43) Date of publication:
**11.08.2010 Bulletin 2010/32**

(51) Int Cl.:
***H04N 7/26*** *(2006.01)*

(21) Application number: **09001836.7**

(22) Date of filing: **10.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Panasonic Corporation**
**Kadoma-shi**
**Osaka 571-8501 (JP)**

(72) Inventors:
• **Narroschke, Matthias, Dr.**
  **63225 Langen (DE)**
• **Drugeon, Virginie**
  **63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **Hierarchical coding for intra**

(57)  The present invention provides a method for encoding, a method for decoding, an apparatus for encoding and an apparatus for decoding an image/video signal. The image signal at the encoder is first segmented into a plurality of partitions. Based on a partition scan pattern, each of the partitions is spatially predicted using pixels of at least one other partition. The resulting partition prediction error is then encoded or decoded using an encoding or decoding method, respectively, selected in accordance with the partition scan pattern.

## Fig. 6

## Description

The present invention relates to a method and an apparatus for video encoding and decoding using intra prediction mode.

BACKGROUND OF THE INVENTION

At present, the majority of standardized video coding algorithms is based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H. 264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted sub(macro)blocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

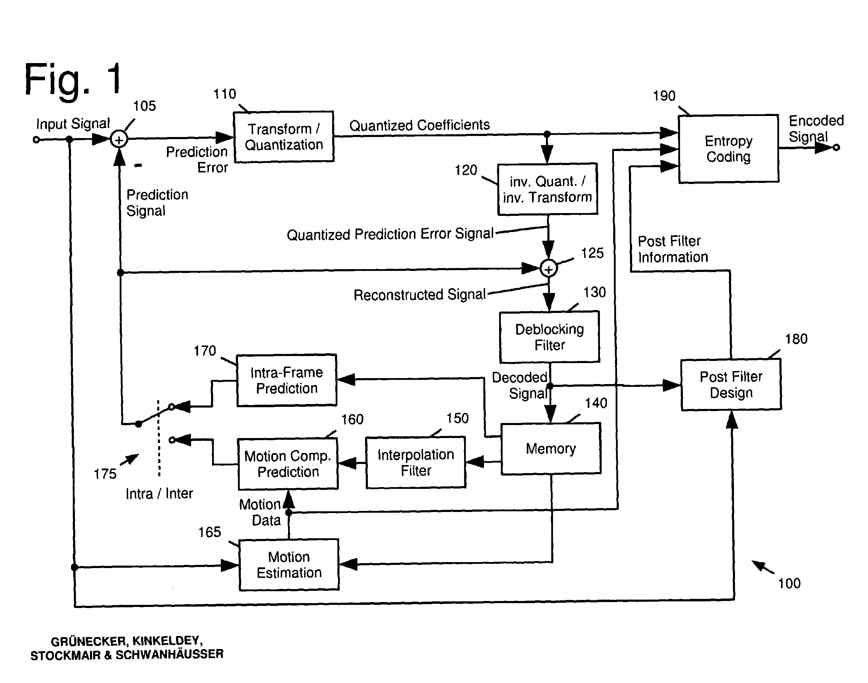

Figure 1 is an example of a typical H. 264/MPEG-4 AVC standard compliant video encoder 100. The H.264/MPEG-4 AVC standard, which is incorporated herein by reference, combines all above-mentioned encoding steps. A subtractor 105 first determines differences between a current block (block to be encoded) of a video image (input signal) and a corresponding predicted block (prediction signal). A temporally (inter) predicted block is a block derived from the previously encoded images, which are stored in a memory 140. A spatially (intra) predicted block is interpolated from the values of boundary pixels in the neighboring blocks, which have been previously encoded and stored in the memory 140. The memory unit 140 thus operates as a delay unit that allows a comparison between current signal values and the prediction signal generated from previous signal values. The memory 140 can store a plurality of previously encoded video frames. The difference between the input signal and the prediction signal, denoted prediction error or residual, is transformed and quantized 110. Entropy encoder 190 is then applied to the quantized transformation coefficients in order to further reduce the amount of data in a lossless way. This is mainly achieved by applying a code with code words of variable length wherein the length of a code word is chosen based on the probability of occurrence thereof.

The H.264/MPEG-4 AVC includes two functional layers, a Video Coding Layer (VCL) and a Network Abstraction Layer (NAL). The VCL provides the encoding functionality as briefly described above. The NAL encapsulates the encoded prediction error signal together with the side information necessary for the decoding of video into standardized units called NAL units according to their further application such as transmission over a channel or storing in storage. There are VCL NAL units containing the compressed video data and the related information, as well as non-VCL units encapsulating additional data such as parameter set relating to an entire video sequence, or recently added Supplemental Enhancement Information (SEI) providing additional information that can be use to improve the decoding performance such as post filter hint.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the decoded prediction error signal. The video signal after deblocking is the decoded signal, which is generally displayed at the decoder side (if no post filtering is applied). The deblocking filter in H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency. The decoded video signal is then stored in the memory 140.

The prediction signal in H.264/MPEG-4 AVC is obtained either by a temporal prediction, reducing the temporal correlation, or by a spatial prediction, reducing the spatial correlation. The type of prediction (spatial/temporal) can be varied on a per macroblock basis. Macroblocks predicted using temporal prediction are called inter-encoded and macroblocks predicted using spatial prediction are called intra-encoded. Here, the term "inter" relates to inter-picture prediction, i.e. prediction using information from previous or following frames. The term "intra" refers to the spatial prediction, which only uses the already encoded information within the current video frame. The type of prediction for a video frame can be set by the user or selected by the video encoder so as to achieve a possibly high compression gain. In accordance with the selected type of prediction, an intra/inter switch 175 provides corresponding prediction signal to the subtractor 105.

In order to be decoded, inter-encoded images require also the previously encoded and subsequently decoded image(s). Temporal prediction may be performed uni-directionally, i.e., using only video frames ordered in time before the current frame to be encoded, or bi-directionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I-type (intra) macroblocks. An inter-encoded macroblock (P- or B- macroblock) is predicted by employing motion compensated prediction 160. First, a best-matching block is found for the current block within a previously encoded and decoded video frame by a motion estimator 165. The best-matching block then becomes a prediction signal and the relative displacement (motion) between the current block and its best match is then signalized as motion data in the form of two-dimensional motion vectors within the side information provided together with the encoded video data. In order to optimize prediction accuracy, motion vectors may be determined with a sub-pixel resolution e.g. half pixel or quarter pixel resolution. A motion vector with sub-pixel resolution may point to a position within an already decoded frame where no real pixel value is available, i.e. a sub-pixel position. Hence, spatial interpolation of such pixel values is needed in order to perform motion compensation. This is achieved by interpolation filter 150. According to the H.264/MPEG-4 AVC standard, a six-tap Wiener interpolation filter with fixed filter coefficients and a bilinear filter are applied in order to obtain pixel values for sub-pixel positions.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images.

In the H.264/MPEG-4 AVC intra coding scheme, the spatial prediction is performed for subblocks of sizes 4 x 4, 8 x 8 or 16 x 16 pixels in order to reduce spatial redundancy. Intra-fame prediction uses a predefined set of intra-prediction modes, which basically predict the current block using the boundary pixels of the neighboring blocks already coded. The different types of spatial prediction refer to different edge directions, i.e. the direction of the applied two-dimensional interpolation. There are nine different prediction modes for subblocks of size 4 x 4 and 8 x 8, and four different prediction modes for the macroblocks of 16 x 16 pixels.

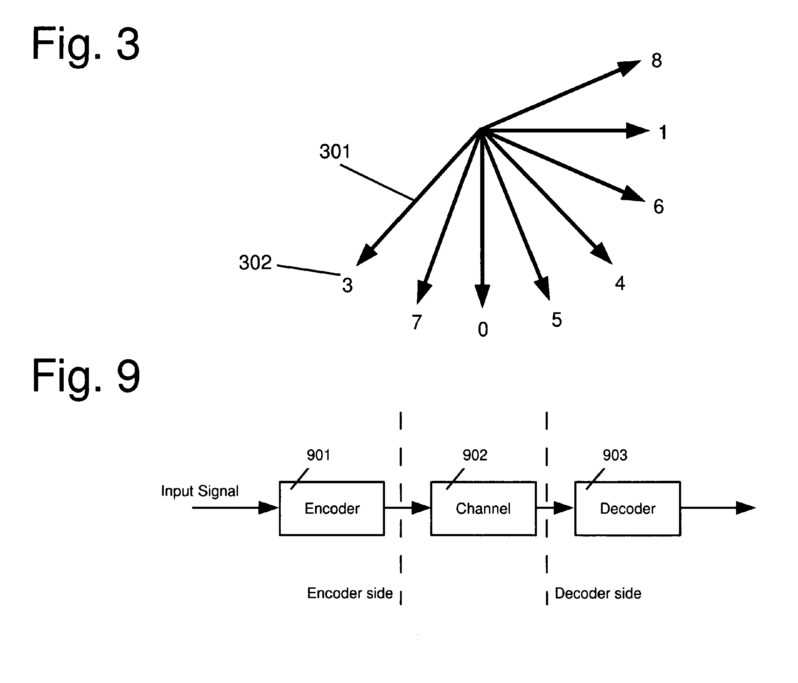

Figure 3 schematically illustrates the nine prediction modes used for the subblocks of 4 x 4 pixels. Eight of the prediction modes are labelled by a value 302 of range {0,1,3,4,5,6,7,8} and associated with predictions in eight different directions 301. The remaining one prediction mode is labelled by value 2 and called "DC mode". In the DC mode, all pixels in a block are predicted by a single value, which is the mean value of the surrounding reference pixels. In the eight directional modes, the reference pixels are repeated along the corresponding directions 301. For instance, the vertical mode (labelled with 0) consists in repeating vertically the reference pixels of the row immediately above the current block. The horizontal mode (labelled with 1) consists in repeating horizontally the reference pixels of the column immediately to the left of the current block. The remaining modes (labelled with one value of 3 to 8) are diagonal prediction modes derived in similar ways.

The prediction signal obtained by such interpolation is then subtracted from the input signal by the subtractor 105 as described above. In addition, spatial prediction type information (label 302) is encoded and provided together with the encoded video signal.

For both the intra- and the inter-encoding modes, the differences between the current input signal and the prediction signal are transformed and quantized by transform quantization unit 110, resulting in the quantized transform coefficients. Generally, an orthogonal transformation such as a two-dimensional discrete cosine transformation (DCT) or an integer version thereof is employed since it reduces the correlation of the natural video images efficiently. After the transformation, low frequency components are usually more important for image quality then high frequency components so that more bits can be spent for coding the low frequency components than the high frequency components.

After quantization, the two-dimensional matrix of quantized transformation coefficients is converted into a one-dimensional array to pass the entropy encoder. Typically, this conversion is performed by a so-called zig-zag scanning, which starts in the upper left corner of the two-dimensional array and scans the two-dimensional array in a predetermined sequence ending in the lower right corner. As the energy is typically concentrated in the left upper part of the block, corresponding to the lower frequencies, the zig-zag scanning results in an array where usually the last values are zero. This allows for efficient encoding using, for instance, run-length codes as a part of/before the actual entropy coding.

H.264/MPEG-4 AVC employs scalar quantization 110, which can be controlled by a quantization parameter (QP) setting the distance between two adjacent reconstruction values. One of 52 quantizers is selected for each macroblock by the quantization parameter. As a consequence of the QP fixed for an entire macroblock, the possible reconstruction values for the macroblock are also fixed. In addition to QP, a quantization matrix (QM) is specifically designed to keep certain frequencies in the source to avoid losing image quality. Quantization matrix in H.264/MPEG-4 AVC can be adapted to the video sequence and signalized together with the video data.

In order to improve the image quality, a so-called post filter 280 may be applied at the decoder side 200. The H.264/MPEG-4 AVC standard allows the sending of post filter information for such a post filter via Supplemental Enhancement Information (SEI) message. The post filter information is determined at the encoder side by means of a post filter design unit 180, which compares the locally decoded signal and original input signal. The output of the post filter design unit 180 is also fed to the entropy coding unit 190 in order to be encoded and inserted into the encoded signal. The entropy coding unit 190 employs different variable length codes for different type of information to be encoded in order to adapt to the statistics thereof. For entropy encoding of the prediction error values in H.264/MPEG-4 AVC, context adaptive variable length code (CAVLC) or context adaptive binary arithmetic code (CABAC) may be used.

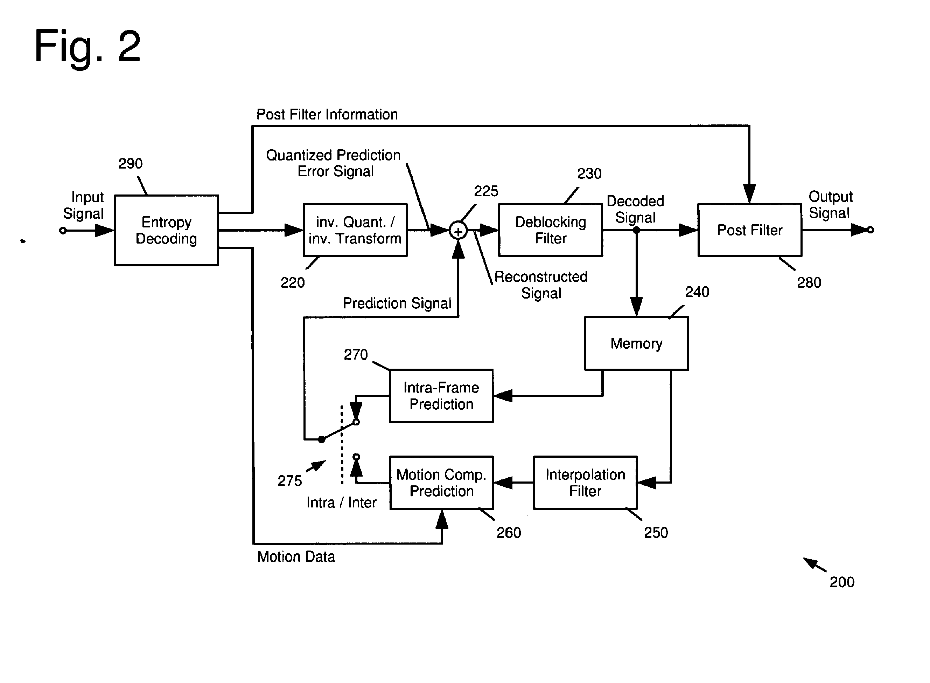

Figure 2 illustrates an example decoder 200 compliant with the H.264/MPEG-4 AVC video coding standard. The encoded video signal (input signal to the decoder) first passes to entropy decoder 290, which decodes the quantized transformation coefficients, the information elements necessary for decoding such as motion data, type of prediction etc., and the post filter information. The quantized transformation coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder. The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks. The post filter information is fed to a post filter 280, which sets up a post filter accordingly. The post filter is then applied to the decoded signal in order to further improve the image quality. Thus, the post filter is capable of adapting to the properties of the video signal entering the encoder on a per-frame basis.

In video coding, intra-coded blocks within both spatially and temporally predicted images serve for refreshing the video sequence and stopping the error propagation. I frames, which are entirely composed of intra-coded blocks further serve as a random access points within the video sequence. Intra-coded images are also used as reference images for the temporal prediction and thus, influence considerably the quality of the reconstructed video. Therefore, typically the I frames are quantized with lower quantization parameter than P and B frames.

However, the efficiency of the spatial encoding is lower then the performance of the temporal encoding, which results in lower overall compression gain as well as to high variations of the resulting bitrate. Using stronger quantization in order to increase the compression gain would lead to lower quality not only for the I frames, but also of the remaining P and B frames, using the I frames/ blocks as a reference.

## SUMMARY OF THE INVENTION

The aim of the present invention is to provide an efficient mechanisms for intra encoding and decoding of images or video sequences.

This is achieved by the features as set forth in the independent claims.

Preferred embodiments are the subject matter of the dependent claims.

It is the particular approach of the present invention to divide an image into a plurality of partitions and to encode each of these partitions separately using an encoding method selected in accordance with a partition scan pattern, which determines how the prediction is performed. Correspondingly, the decoding of the partition prediction error is performed by selecting the decoding method and performing the prediction in accordance with the partition scan pattern and by reconstructing the partitions accordingly.

Such an approach enables better adapting of the coding method to the spatial character of the image and thus, to improve the quality of intra coding with respect to the data rate.

According to an aspect of the present invention, a method for encoding an image or video of pixels is provided. An image is first divided into a plurality of partitions, each partition having at least one pixel. Pixels of a partition are predicted based on the pixels of at least one other partition selected in accordance with a partition scan pattern and partition prediction error is calculated. For each partition prediction error, an encoding method is selected in accordance with the partition scan pattern and the partition prediction error is encoded accordingly.

According to another aspect of the present invention, an encoder for an image signal of pixels is provided. The encoder comprises a segmentation unit for dividing an image into a plurality of partitions, each partition having at least one pixel; a predictor for predicting pixels of a partition based on the pixels of at least one other partition selected in accordance with a partition scan pattern and for calculating a partition prediction error; a selector for selecting for each partition prediction error an encoding method in accordance with the partition scan pattern; and an encoder for encoding the partition prediction error accordingly.

According to another aspect of the present invention, a method for decoding an encoded image signal of pixels, the image signal being divided into a plurality of partitions, wherein each partition has at least one pixel, is provided. Pixels of a partition are predicted based on the pixels of at least one other partition selected in accordance with a partition scan pattern. For each partition prediction error, a decoding method is selected in accordance with the partition scan pattern and the partition prediction errors are decoded accordingly. The pixels of a partition are then reconstructed as a sum of the predicted partition and the decoded partition prediction error.

According to yet another aspect of the present invention, a decoder is provided for decoding an encoded image signal divided into a plurality of partitions, wherein each partition has at least one pixel. The decoder comprises a predictor for predicting pixels of a partition based on the pixels of at least one other partition selected in accordance with a partition scan pattern; a selector for selecting for each partition prediction error a decoding method in accordance with the partition scan pattern; a decoder for decoding the partition prediction error accordingly; and a reconstructor for reconstructing the pixels of a partition as a sum of the predicted partition and the decoded partition prediction error.

In particular, the partitions may be one-dimensional partitions such as rows, columns, diagonals or any opened or closed lines. However, a partition also may be two-dimensional. The determining of partition sizes and shapes is preferably performed taking into account the spatial characteristics, such as edges, of the image to be encoded. One-dimensional partitions have the advantage of local adaptation to the statistics of the image content.

The partition scan pattern preferably comprises partition scan order, i.e. the order in which the partitions are scanned to be encoded. The partition scan pattern may also or alternatively comprise the relations among the partitions with respect to their prediction, i.e. to comprise for a partition the number and, if necessary, the identification of other partitions using the partition as a reference, or vice versa, to comprise for a partition the number and, if necessary, the identification of other partitions that are used to predict the partition. The partition scan pattern may be fixed for the entire video or image. However, it may also be adapted within the image for its parts such as blocks, macroblocks or subblocks, or any other image areas. In general, for one partitioning scheme, different partition scan patterns may be defined. The partition scan pattern is preferably such that it allows a bi-directional prediction of each partition using at least two other partitions surrounding the partition from different sides. However, the partition scan pattern may also define a uni-directional prediction resulting from a scan order, such as, for instance a raster scan order. The bi-directional prediction typically enables a more efficient prediction than the uni-directional one, which results in a smaller prediction error that can be more efficiently further encoded.

In accordance with an embodiment of the present invention, the image signal is divided into a plurality of image blocks. An image block is further divided into a plurality of partitions and the partition scan pattern defines the scan pattern of partitions within the image block. Choosing partitions that result from dividing image blocks of an image into partitions has, on one side, the advantage of smaller partitions that can be better adapted to the changing spatial characteristics of the image. On the other hand, the pre-segmentation of the image to image blocks and then applying the partitioning can be beneficial when employing the present invention to an existing image or video coding standard, since the most of them are based on compressing the image blocks.

The prediction of a partition using the pixels of at least one other partition may be performed in various ways (prediction modes). For instance, the pixel of the other partitions chosen as a reference may be averaged in order to obtain the predicted value. However, a weighted average or any other function of the reference pixels may also be used. For particular partitioning schemes and image contents, different prediction schemes may be appropriate.

The encoding and decoding refer to one of the methods that can be used to compress the partition prediction error, such as transformation, coefficient scan, quantization and/or entropy coding. A single or a combination of these methods may be selected in accordance with the partition scan pattern. In particular, the selecting may include selecting whether transformation coding is applied or not, or selecting a coding table or a probability model for the entropy coding.

The selecting is preferably performed by selecting one coding method from a plurality of predefined coding methods in accordance with a partition class. Here, a partition class includes partitions being used for predicting a predefined number or size in pixels of other partitions. The predefined number of other partitions may be a single value, or a set of values, for instance, a class may comprise partitions that are used for predicting of 2,3, or 5 other partitions. Similarly, the predefined amount of pixels may refer to a single value, or to a set of values. For instance, a class may comprise partitions that are used for prediction of partitions of total amount of pixels from a certain set. A partition class may also include partitions, for prediction of which a predefined number of partitions is used. Again, a predefined number refers to a single number or to a set of values. An example of two classes of partitions is a class comprising partitions that are not used as a reference for other partitions, and a class that comprises all other partitions. However, other classes may be defined that reflect the statistics of the partitions included therein more precisely. Determining of encoding or decoding method for a partition class rather than for a partition directly reduces the necessary signalling overhead and allows, at the same time, adapting of the encoding or decoding methods to the statistics of a particular partition class. The classes may be fixedly predefined in general, or for a particular partition scan pattern.

However, the selection may be performed for individual partitions individually. The Selection may be performed either according to rules known at both encoder and decoder, and/or the a data may be signaled from the encoder side to the decoder side in order to support the selection. For instance, the selected method may be signaled, or a rule for selection.

In accordance with an embodiment of the present invention, the encoding includes quantization. Accordingly, the selecting step comprises selection of a quantization method and/or parameters of quantization in order to finer quantize the partitions being used for predicting higher number or size in pixels of other partitions. This allows encoding the partitions used as a reference to be encoded with finer quantization, which, on the other hand, improves the quality of the prediction and reconstruction. Moreover, in addition to the partition scan pattern, the selection of encoding or decoding method may be performed conditioned on the values of previously encoded or decoded partitions.

In accordance with yet another aspect of the present invention, a computer program product comprising a computer-readable medium having a computer-readable program code embodied thereon is provided, the program code being adapted to carry out the present invention.

In accordance with still another aspect of the present invention, a system for transferring a video signal from an encoder side to a decoder side is provided, comprising an encoder as described above, a channel for storing or transmitting the encoded video signal, and a decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

The above and other objects and features of the present invention will become more apparent from the following description and preferred embodiments given in conjunction with the accompanying drawings in which:

Figure 1    is a block diagram of a conventional H. 264/MPEG-4 AVC video encoder;

Figure 2    is a block diagram of a conventional H. 264/MPEG-4 AVC video decoder;

Figure 3    is a schematic drawing illustrating possible directions of intra-prediction in H. 264/MPEG-4 AVC for subblocks of size 4 x 4 or 8 x 8;

Figure 4    is a schematic drawing illustrating blocks divided into partitions of various shapes and sizes;

Figure 5    is a schematic drawing illustrating examples of a prediction of a partition;

Figure 6    is a schematic drawing illustrating an example of a one-dimensional partition scan pattern used in an embodiment of the present invention;

Figure 7    is a schematic drawing illustrating an example of a two-dimensional partition scan pattern used in another embodiment of the present invention;

Figure 8    is a block diagram illustrating an example coding system with an encoder and a decoder in accordance with the present invention; and

Figure 9    is a schematic drawing of a system with an encoder and a decoder in accordance with the present invention.

DETAILED DESCRIPTION

The problem underlying the present invention is based on the observation that the block structure used for encoding of the intra-blocks does not necessarily exploit spatial variation of the image statistics. The spatial statistics within an image essentially depends on the image content, especially on the number, strength and direction of edges. Thus, also the efficiency of encoding using at least one of spatial prediction, transformation, quantization, and entropy coding may not perform optimally for blocks.

In accordance with the present invention, the intra prediction is performed by dividing an image into a plurality of partitions, for which the spatial prediction is performed, wherein a coding method is selected per partition, based on a partition scan pattern.

Determining the coding method per partition and in accordance with the partition scan pattern has the advantage of closer adapting of the coding method to the statistics of the prediction error, i.e., for a particular partition. The partition scan pattern determines the order of performing the prediction and coding of the prediction error and/or the number of partitions that are used for the prediction. The number of partitions that are used for the prediction, on the other hand, determines for a partition the quality of its prediction whereas quality may refer to the energy and the remaining statistical dependencies of the prediction error. Furthermore, the spatial distance of the pixels used for prediction determines for a partition the quality of its prediction. Consequently, a suitable partitioning and adapting of the encoding provides an efficient means for intra coding.

The partitioning may be performed in many different ways. An image may be divided into partitions of equal or different sizes. The partition scanning pattern, including the order of encoding the partitions and/or the number of partitions used for prediction and/or the spatial distance of the pixels used for prediction to the pixels to be predicted, is preferably chosen such that most of the partitions are predicted using at least one other partition, which is not necessarily adjacent to the partition to be predicted. The partitioning as well as partition scan pattern may be adapted to the spatial characteristics of the image.

The present invention can also be applied to image and video coding standards processing the image block-wise. In such case, for instance, a plurality of partitions per block may be defined and the encoding/decoding method may be adapted accordingly. However, partitioning wherein a partition includes a plurality of image blocks, is also possible.

Partitioning of a block into one-dimensional (1 D) partitions in order to improve intra prediction in H. 264/MPEG-4 AVC standard has lately been proposed by G. Laroche, J. Jung, B. Pesquet, "Intra Prediction with 1D macroblock partitioning for image and video coding", Proc. of SPIE Visual Communications and Image Processing (VCIP 2009), San Jose, Jan. 2009, which is incorporated herein by reference. A macroblock is split into several one-dimensional partitions, which are subsequently coded and used to predict further 1 D partitions. This enables reduction of the distance between the pixels to be predicted and the pixels used to predict them, which, on the other hand, leads to smaller prediction error.

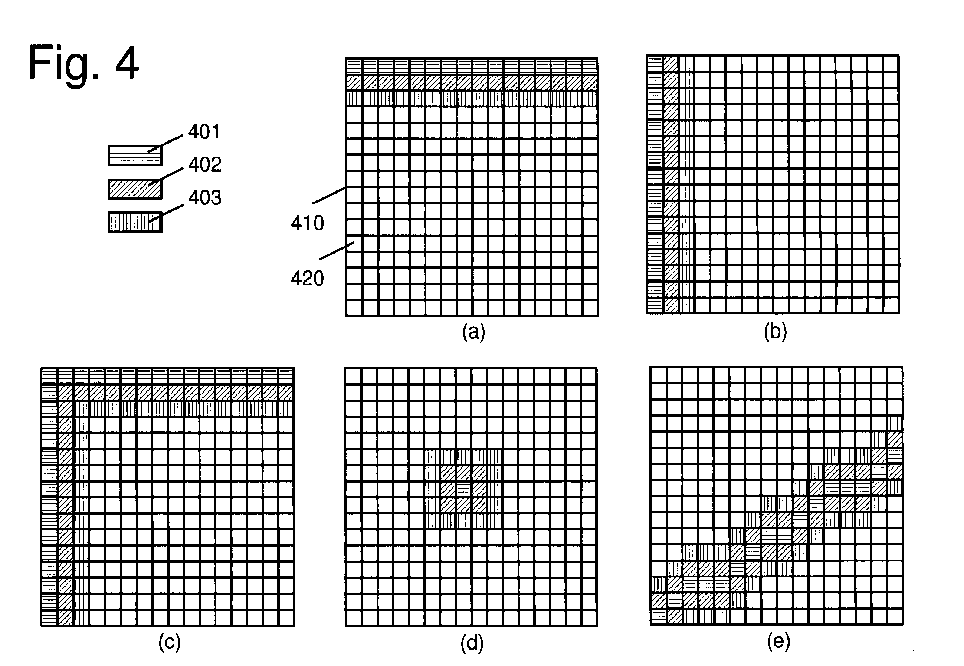

Figure 4 illustrates examples of first three 1D partitions 401, 402 and 403 within a macroblock 410 of 16 x 16 pixels 420, having different shapes and sizes. In particular, part (a) of Figure 4 shows three 1 D partitions, each partition representing one row within a macroblock. Part (b) of Figure 4 illustrates three 1 D partitions, each of them representing a column within a macroblock. Another partitioning is shown in part (c) and part (d) of Figure 4, where the three 1 D partitions 401, 402 and 403 have different sizes. Part (e) of Figure 4 illustrates three diagonal 1 D partitions.

The 1 D partitions can be predicted and encoded according to different partition scan patterns, wherein a partition scan pattern includes the definition of the scan order of partitions to be predicted and/or encoded as well as the partitions used for their prediction. The partitions used for prediction may furthermore be defined by the prediction mode. For instance, part (a) of Figure 4 shows a "raster scan" order consisting in encoding the first row (partition 401) at first, then encoding the second row (partition 402), the third row (partition 403), etc. until the last row of the block. A "bi-directional scan" order consists in skipping every second partition and encoding, with a delay, the partitions located between the two previously encoded ones. In the example of part (a) of Figure 4, the first row (partition 401) is encoded, then the third row (partition 403), then the second row (partition 402), then the fifth row, then the fourth row, etc. until the entire block has been encoded. The advantage of such a scan is the possibility of using for the prediction of each partition two neighboring partitions. A "hierarchical scan" order specifies a pyramidal hierarchy of the partition scan. For instance, for a hierarchy of eight partitions (of arbitrary shape and size, e.g., as shown in any part of Figure 4) p1, p2, ..., p8, the partition p8 is encoded first, then the partition p4 is encoded, followed by the partitions p2, p6, p1, p3, p5, and p7.

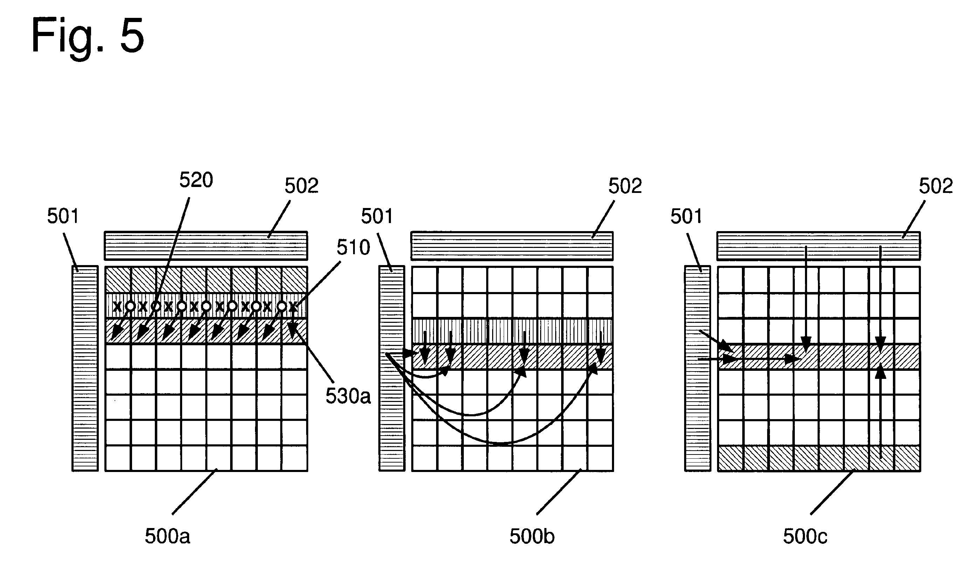

Figure 5 illustrates three examples of an 8 x 8 block 500a, 500b and 500c to be predicted using the boundary pixels of the left neighbouring block 501 and/or top neighbouring block 502 as well as pixels of already coded (encoded or decoded depending on whether the prediction is performed at the encoder or at the decoder) partition(s). The partitioning corresponds to the partitioning shown in part (a) of Figure 4, wherein each partition corresponds to a row of the block. Block 500a is predicted row-wise, each pixel in a row is predicted (represented as an arrow 530a) as an average 520 of two pixels 510 in the row on the top of the currently predicted row. Blocks 500b and 500c are predicted using the prediction pixels from the previously predicted partitions of the same block and of the neighbouring left block 501 or top block 502. The arrows in the figure illustrate from which reference pixels the pixels of a current partition are predicted. The prediction may be, for instance, a simple or a weighted average or any other function of the reference pixels.

After performing the prediction of a 1 D partition at the encoder, a prediction error is calculated between the partition to be predicted and the prediction thereof. The resulting prediction error is further transformed by a 1 D transformation. This may be in case of block-based partitions a 1 D part of the 2D separable transformation used in H.264/MPEG-4 AVC. The transformed partition prediction errors are then encoded. The encoding may include, for instance, a quantization and an entropy coding.

The present invention is not limited to 1 D partitioning as described above. For some contents, partitions of other shapes and sizes, such as two-dimensional partitions, may be beneficial. Using of a suitable partitioning may locally improve the performance of the spatial prediction. The resulting compression gain with respect to the reconstruction quality, however, depends essentially on statistics of the resulting prediction error, which is influenced by the partition scan pattern within the block. Thus, adapting the coding; including at least one of transformation, quantization, and entropy coding; using the partition scan order as an indication of the prediction error statistics provides together with an appropriate choice of the partitioning an efficient means for improving the intra-coding.

The choice of partitioning is preferably performed for parts of image having similar statistics. It may also be performed per block or macroblock based on its spatial characteristics such as number, strength, and/or direction of edges. Such characteristics may be determined in various different manners in spatial or frequency domain.

The chosen partitioning and/or the partition scan pattern may then be signalized on a per macroblock or block basis, similarly to signalling of the prediction mode in H.264/MPEG-4 AVC. Alternatively, they may be determined based on the partitioning of the already decoded blocks at both encoder and decoder.

In the bi-directional scan and in the hierarchical scan as described above, the quality of partitions that are used for prediction of other partitions is more important than the quality of partitions that are not used in the prediction of other partitions. Said in a simplified manner, the quality of a partition is the more important the more often it is used for the prediction of other partitions. Of course, other measures than the frequency of usage may be more suitable. For instance, the size of the image area, predicted using the given partition. Especially for partitioning to partitions having different sizes, such a measure of importance of the quality may better reflect the reality.

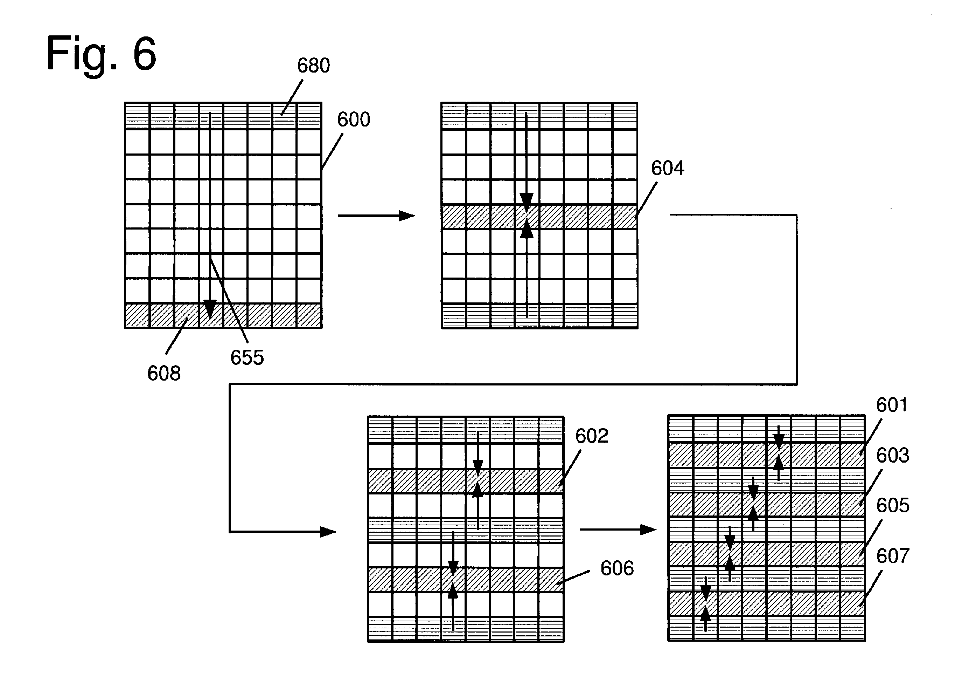

Figure 6 illustrates an 8 x 8 block 600 divided in eight partitions 601 to 608 corresponding to rows 1 to 8 of the block. As can be seen from in the Figure, the partitions are encoded in the following order according to the hierarchical scan: 608, 604, 602, 606, 601, 603, 605, 607. First, partition 608 is predicted uni-directionally (illustrated by the arrow 655) using the last row 680 of the top neighbouring block. However, partition 608 does not have to be predicted at all, or such prediction may be impossible, for instance, if the block is located on the top image boundary. In such case, directly the values (pixels) of the block may be encoded. Not predicting partition 608 could decrease the compression gain, but, on the other hand, could prevent spatial error propagation. After predicting partition 608, in the next step, partition 604 is predicted bi-directionally using partition 608 and the last row of the top neighbouring block 680. Then, partitions 604 and 608 are used to predict partition 606 and partitions 604 and the last row of the top neighbouring block 680 are used to predict partition 602. After this step, each of the remaining partitions 601, 603, 605, 607 has two directly adjacent partitions, which are used for its prediction.

In other words, in this example, partition 608 is used to predict partition 604. Partition 604 is further directly used to predict the partitions 602 and 606, as well as partitions 603 and 605. Partition 602 is used to predict the partitions 601 and 603. Partition 606 is used to predict partitions 605 and 607. However, partitions 601, 603, 605 and 607 are not used to predict other partitions. Therefore, the quality of the pixels belonging to the partitions 608, 604, 602 and 606 is more important than the quality of the pixels belonging to partitions 601, 603, 605 and 607, because quantization errors in the reference pixels propagates due to the prediction to other partitions and therefore potentially decrease the quality of the prediction resulting in an increased prediction error and thus in an increased data rate.

Thus, using individual coding schemes for each individual partition enables improving the performance of the intra coding. Here, the coding scheme may consist of a transform, quantization, and entropy coding, but it is not restricted thereto. In general, the pixels most often used as reference pixels for the prediction of pixels in another partitions are encoded with less quantization errors as the pixels, which are not later used as references for the prediction of pixels of other partitions. In the above example, the frequency of using a partition as a reference for prediction of another partitions has been used as a measure for determining the quality of which partitions is important. This frequency of serving as a reference is a consequence of the chosen partition scan pattern, defining the order of encoding for each partition and/or the partitions used as a reference for the prediction thereof.

As can be seen from Figure 6, the partition scan pattern also defines the distance between the pixel of the partition to be encoded and the corresponding reference pixels from the other partitions. In general, the smaller the distance between the predicted pixel and the corresponding reference pixels, the more exact the prediction. Thus, the distance also influences the statistics of the resulting partition prediction error the coding is adapted to in accordance with the present invention. In this example, the partitions being predicted from the closest other partitions are those, which are not used as a reference for the prediction of other partitions. However, this is not necessarily always the case and depends on the partition scan pattern.

In order to increase the efficiency of the entropy coding used to encode the resulting partition prediction error, an individual coding scheme may be applied for each partition. Since the statistics of the prediction error in each of the partitions may be different, an individual transform, an individual quantization scheme, and an individual entropy coding scheme designed for the statistics of the prediction error of each partition may be used.

However, adapting of encoding for each partition would require additional signalling of the chosen encoding scheme per partition, which could lead to a considerable increase of the data rate. Therefore, in accordance with an embodiment of the present invention, the coding scheme is adapted depending on a partition class. The partition class denotes a group of partitions, for which the coding scheme remains the same. One example of partition classes is a class containing reference partitions that are used as a reference for prediction of other partitions, and a class containing non-reference partitions that are not used for prediction of another partitions. Referring to Figure 6, the partitions 601, 603, 605, and 607 would form a non-reference partition class and the remaining partitions 602, 604, 606, and 608 could form a reference partition class.

However, the reference class may be further refined to, for instance, a first and a second class reference partitions, depending on the amount of use of the pixels of the class partitions to predict other partitions. For instance, the partitions 604 and 608 in Figure 6 would be first class reference partitions and the partitions 602 and 606 would be second class reference partitions. Each partition is encoded with the coding scheme corresponding to its class. Classification of the partitions simplifies the decision about the coding scheme to be used for a particular partition and prevents increasing the data rate as a consequence of coding scheme signalling for each partition. Classifications may be based on the number of partitions using the current partition for prediction, or, more exactly, on the number of pixels in the partitions using the current partition for prediction. Partition class may also take into account the prediction mode of a partition.

One aspect of the coding scheme is the transform. After the prediction, the resulting prediction error is computed and transformed in order to exploit the remaining spatial correlation. This transform can be adapted for each partition class. In certain situations, in which there are only marginal statistical dependencies between the prediction error samples, it might be preferable to skip the transform and code the prediction error samples directly in the spatial domain, e.g. by a technique described in M. Narroschke, "Extending H.264/AVC by an adaptive coding of the prediction error", Proceeding of Picture Coding Symposium, Beijing/China, April 2006, which is incorporated herein by reference.

As the non-reference partitions in the scheme introduced with reference to Figure 6 are generally close to the reference partitions (for instance, the non-reference partition 603 is enclosed between the reference partitions 602 and 604), the prediction performance is expected to be better. For this example, a spatial domain coding could be used for the non-reference partitions, because the statistical dependencies between the prediction error samples are expected to be marginal. Another possibility is to determine on the encoder side an appropriate transform, e.g. the decorrelating Karhunen-Loève Transformation (KLT), for each partition class or each individual partition in order to exploit the different statistics in each partition class or in each individual partition. The inverse transform for each partition could be either set fixed or coded and embedded into the bitstream. The decoder then correspondingly decodes the inverse transform for each partition and uses it for the decoding.

In accordance with another embodiment of the present invention, the quantizer is adapted for each partition. Individual quantizers could be used for each partition class or each individual partition. As a general approach, completely individual quantization schemes could be used for each partition. For example a uniform scalar quantizer may be used for one partition and a non-uniform vector quantizer for another partition. For instance, vector quantizers may be beneficial for the non-reference partitions of Figure 6, predicted bi-directionally using the adjacent partitions.

In particular, the individual quantization parameters may be used for each partition class or for each individual partition. This allows generating small quantization errors for the pixels that are mostly used as reference pixels and it furthermore allows generating larger quantization errors for the pixels that are less frequently used as reference pixels. As a consequence, more bits are spent for the pixels later used as references for the prediction of other partitions. As the non-reference partitions generally have a spatially close distance to the reference partitions, the prediction is expected to be precise. Furthermore, as the pixels belonging to the non-reference partitions are not further used for prediction, a large quantization error superposed to these pixels will not propagate through the prediction process to other parts of the image. Therefore, the introduced quantization errors are not critical and the quantization step size used in the quantization process for these pixels can be higher than the one used for the quantization of the reference pixels. On the contrary, the pixels belonging to the reference partitions generally have a spatially further distance from the already encoded reference pixels. The prediction is thus less precise. As these pixels are used as references for other partitions, an error in these pixels will cause inaccurate predictions for the other partitions. Therefore, a smaller quantization step size, which is associated with a smaller quantization error, should be used.

Beside the use of individual quantization step sizes in each partition or partition class, it is also possible to use additional so-called quantization offsets in addition. The concept of quantization offsets is described in Thomas Wedi, Steffen Wittmann, "Quantization offsets for Video Coding". Proc. of ISCAS 2005, which is incorporated herein by reference. Quantization offsets for video coding were introduced in order to adjust the representative values in the quantization intervals. The offsets are transmitted to the decoder to use the same representative values as the encoder in the process of prediction error decoding. Different offsets could be transmitted for the reference and non-reference partitions in order to further adapt the quantization process depending on the status of the encoded pixels (i.e. reference or non-reference pixels). Apart from quantization parameter and the quantization offset, it is possible to use quantizers of a completely different design for each partition class. For example, a non-uniform quantizer may be used in one partition (class) and a uniform quantizer in another partition (class).

In accordance with an embodiment of the present invention, the QP of value qp1 is used for the quantization of the first class of partitions used as references (for example the partitions 608 and 604 in Figure 6), the QP of value qp2 is used for the second class of partitions used as references (for example the partitions 602 and 606), and a third QP of value qp3 is used for the partitions that are not used as references (for example the partitions 601, 603, 605 and 607). The relation between the QP values may be predefined and given, for instance, by the following relation:

$$qp2=qp1+1,$$

$$qp3=qp1+2.$$

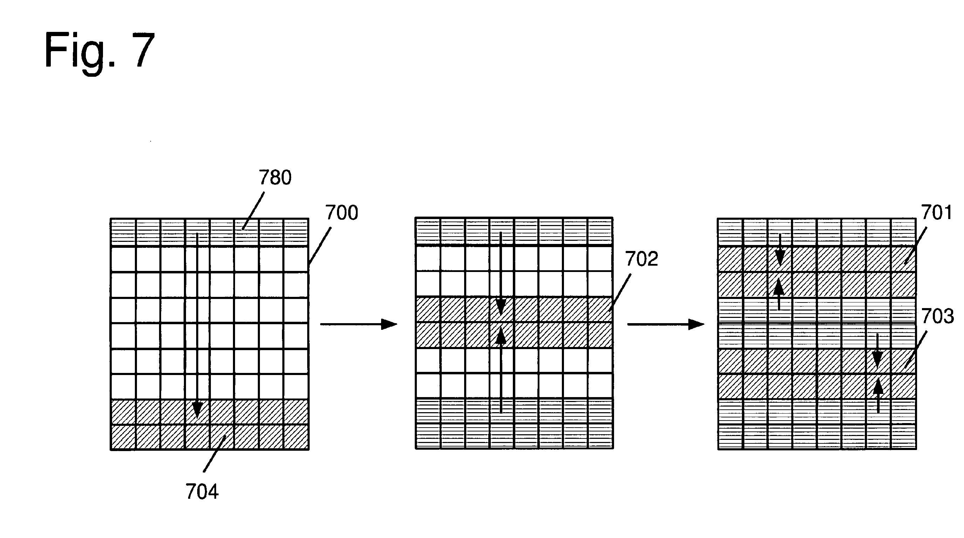

The hierarchical scan order may be used with other form of partitions, not only with 1 D partitions shown in Figure 4. Figure 7 shows an example, in which four 2 x 8 partitions 701, 702, 703 and 704 in an 8 x 8 block 700 are handled. In this example, the partitions are encoded in the following order: 704, 702, 701, and 703. The QP value qp1 is used to quantise the prediction error signal in the partitions 704 and 702, and the QP value qp2 is used for the partitions 701 and 703, with qp2=qp1+1. Other relations between quantization parameters of the partitions or partition classes may obviously be used in order to adapt the encoding to the partitioning.

According to still another embodiment of the present invention, the coding scheme comprises a scan of the coefficients/prediction error values within a partition, which is the order to code and transmit the transformed coefficients in the bitstream. The scan may also be adapted for each partition class in accordance with the characteristics of the content included therein. Adapting the scan may be particularly beneficial for larger partitions and for 2D partitions.

According to yet another embodiment of the present invention, the coding scheme includes an entropy coding scheme. In order to get the highest coding efficiency, the quantized data of each partition of a partition class is encoded by an individual entropy coding scheme. In particular, individual code word tables may be used for the coding of each partition or partition class, e.g. Huffman code word tables. This can be used for example as an extension of the CAVLC defined in H. 264/MPEG-4 AVC. On the other side, as an extension of the CABAC entropy coding scheme in H.264/MPEG-4 AVC standard, it is possible to use individual context for each partition or partition class. This allows the use of individual probability models and corresponding initial probabilities, for instance, per partition class. Since CABAC derives the arithmetic code out of the probability model, individual arithmetic codes for each partition or partition class are enabled. Individual coding schemes for each partition or partition class conditioned on already coded partitions

In addition to adapting the coding scheme on a per partition basis in accordance with the partition scan pattern, the selection of the appropriate coding scheme may be conditioned on the already coded partitions of the macroblock. For instance, for each partition or partition class, one out of several coding schemes may be selected conditioned on the amplitude of the quantized data of already encoded partitions. The quantized data can be coefficients if a transform has been used or directly the samples of the prediction error. The conditioning may be performed based on the magnitude of the samples or a statistics thereof such as the variance or any other criterion such as the number of quantized coefficients or quantized samples that have a zero or a non-zero value.

In particular, the selection of the code in the entropy coding step of certain partitions can be conditioned on the already coded partitions. For this purpose, the amplitudes of the quantized data of already transmitted partitions could be used to select the codewords for the entropy coding of the current partition. For example, in the context of CABAC, different contexts could be used, e.g. depending on the amplitude of the quantized prediction error in the already transmitted partitions or depending on any other criterion as stated above.

Another example is the selection between transform and spatial encoding of the prediction error depending on the amplitude of the prediction errors of the surrounding reference partitions. If a non-reference partition (for example partition 603 in Figure 6) is predicted from two reference partitions with a very low prediction error (partitions 602 and 604), the residual error of the two reference partitions 602 and 604 is expected to be low. Therefore, the prediction of the considered non-reference partition 603 is expected to be particularly accurate, and the resulting prediction error to be uncorrelated. The prediction error could be encoded in spatial domain, or not encoded at all.

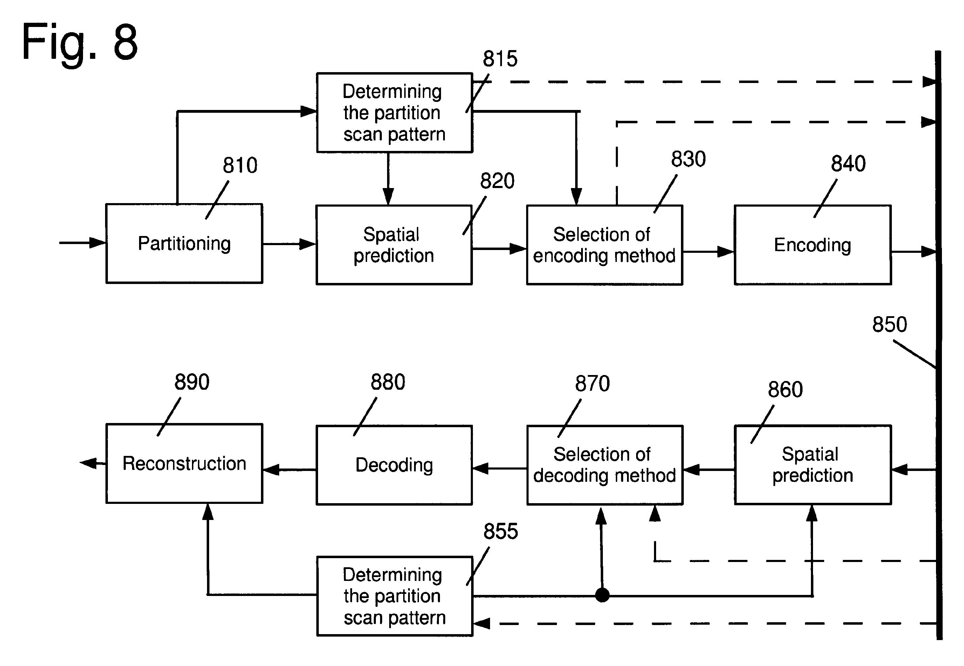

Figure 8 is a block diagram illustrating an example system including an encoder and a decoder in accordance with the present invention. The input image is first partitioned 810, i.e. divided into a plurality of partitions. For the resulting partitions, a scan pattern is determined. The partitioning may be either fixed for the entire image and/or video, or it may adapted on a per image basis, or it may be adapted within an image on a macroblock, block, or subblock basis. The choice of the partitioning is preferably performed taking into account the spatial characteristics of the corresponding image/block. Together with the partitioning, the partition scan pattern 815 is determined, i.e. the order of the partitions to be encoded or, for each partition the other partitions used for its prediction. The choice of partitioning and partition scan pattern may be, for instance, performed by selecting them from a set of predefined combinations of partitioning and partition scan pattern. The choice may be embedded within the encoded bitstream. Alternatively, the choice may be performed based on already encoded partitions and thus, determined implicitly at both, encoder and decoder side. After partitioning, each partition is predicted spatially 820, using pixels of at least one other partition, the position of which may be specified within the partition scan pattern. The partitions are predicted in the order that may also be specified within the partition scan order. However, one of the order and the position of the partitions used for prediction, may also be fixedly predefined. After calculating the spatial prediction 820, partition prediction error is determined. The partition scan order 815 is then used to select the encoding method to be used for encoding of the determined partition prediction error. The selection 830 may be performed for each partition separately or, partition classes may be defined, for which the selection is performed. In particular, the classes may be formed in accordance with the position of a partition within the partition scan pattern and/or within the size or number of partitions using it as a reference. The selection of an encoding method may also take into account the prediction mode, i.e. the particular way of predicting the pixels of one partition based on pixels of other partition (s), for instance, as exemplified in Figure 5. The encoding method may include at least one of the transformation, coefficient scan order, quantization and entropy coding. The selected encoding method and/or the partition scan pattern may be provided to the decoder side, possibly encoded, for instance, using a suitable entropy coding The prediction error is then encoded 840 in accordance with the selection.

The encoder and the encoding process as described above may be embedded within an image of video encoder, such as H.264/MPEG-4 AVC encoder described with reference to Figure 1. The present invention would replace the intra prediction and encoding performed in at least one of the blocks 110, 120, 170, 190. Moreover, the partitioning may be performed per macroblock or block, which would only require replacing the intra-frame prediction 170 by the segmentation unit 810, spatial predictor 820, and selector 830. The selected encoding method/parameters should then be set in at least one of the transform and quantization 110 and entropy coding 190.

The spatially encoded image/block in accordance with the present invention is then written within the bitstream, which is typically further stored in storage 850 or transmitted over a channel 850. At the decoder side, the encoded partition prediction errors are received. Spatial predictor 860 is capable of performing for each predicted partition based on already predicted/decoded partitions determined in accordance with the partition scan pattern. The received partition prediction errors are decoded by a decoder 880 using a decoding method selected by a selector 870 based on the prediction scan pattern 855, in particular, the position of the partition to be decoded within the scan order and its relation to the other partitions. The partition scan pattern 855 may be signalized or fixedly set for the video sequence, image, or any part of an image such as a block. The encoding method to be selected, may also be obtained from the encoder side, possibly encoded using a code such as an entropy code. After having the partition prediction and the decoded partition prediction error, the partition may be reconstructed. With help of the partition scan pattern, in particular, the partition scan order, the whole image or block may be reconstructed within a reconstructor 890.

Figure 9 illustrates a system for transferring a video signal from an encoder side to a decoder side in accordance with the present invention. An input video signal is encoded by an encoder 901 and provided to a channel 902. The encoder 901 is an encoder in accordance with any of the embodiments of the present invention as described above. The channel 902 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 902 or an application for transferring the encoded video signal into the storage. The encoded video signal is then obtained from the channel 902 by a decoder 903. The decoder 903 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JVT.

Summarizing, the encoding and decoding of a video signal according to the present invention employ intra coding wherein the image is first divided into a plurality of partitions and wherein each partition is intra predicted based on the partition scan pattern, the prediction using pixels of at least one other partition. The coding scheme used for encoding and/or decoding is selected for a partition in accordance with the partition scan order.

**Claims**

1. A method for encoding an image signal of pixels comprising the steps of:

   dividing (810) an image into a plurality of partitions, each partition having at least one pixel;
   predicting (820) pixels of a partition based on the pixels of at least one other partition selected in accordance with a partition scan pattern and calculating a partition prediction error;
   selecting (830) for each partition prediction error an encoding method in accordance with the partition scan pattern and encoding (840) the partition prediction error accordingly.

2. A method according to claim 1 wherein
   the selecting step (830) includes at least one of selecting whether transformation is applied or not, selecting a type of transformation, selecting a coding table or a probability model for entropy encoding, and selecting a quantization method and/or parameters of quantization; and
   the selecting step (830) is performed either according to predefined rules known at both encoder and decoder side, or a data for performing the selection is provided to the decoder side.

3. A method for decoding an encoded image signal of pixels, being divided into a plurality of partitions, each partition having at least one pixel, the method comprising the steps of:

   predicting (860) pixels of a partition based on the pixels of at least one other partition selected in accordance with a partition scan pattern;
   selecting (870) for each partition prediction error a decoding method in accordance with the partition scan pattern and decoding (880) the partition prediction error accordingly;
   reconstructing (890) the pixels of a partition based on the predicted partition and the decoded partition prediction error.

**4.** A method according to claim 3 wherein the selecting step (860) includes at least one of selecting whether inverse transformation is applied or not, selecting a type of inverse transformation, selecting a coding table or a probability model for entropy decoding, and selecting an inverse quantization method and/or parameters of inverse quantization; and the selecting step is performed either according to predefined rules known at both encoder and decoder side, or according to data obtained from the encoder side.

**5.** A method according to any of claims 1 to 4 wherein the image signal is divided (600) into image blocks; an image block is divided into a plurality of partitions (601-608); and the partition scan pattern defines the scan pattern of partitions within the image block (600).

**6.** A method according to any of claims 1 to 5, wherein the selecting step (830, 860) is performed by selecting one coding method from a plurality of the predefined coding methods in accordance with a partition class; a partition class includes partitions being used for predicting a predefined number of other partitions, or partitions being used for predicting a predefined amount of pixels of other partitions, or partitions, for prediction of which a predefined number of other partitions is used.

**7.** A method according to any of claims 1 to 6, wherein the selecting step (830, 860) is performed in accordance with pixel values of previously coded partitions.

**8.** An apparatus for encoding an image signal of pixels comprising:

a segmentation unit (810) for dividing an image into a plurality of partitions, each partition having at least one pixel;
a predictor (820) for predicting pixels of a partition based on the pixels of at least one other partition selected in accordance with a partition scan pattern and for calculating a partition prediction error;
a selector (830) for selecting for each partition prediction error an encoding method in accordance with the partition scan pattern; and
an encoder (840) for encoding the partition prediction error accordingly.

**9.** An apparatus according to claim 8 wherein the selector (830) is capable of at least of one of selecting whether transformation is applied or not, selecting a type of transformation, selecting a coding table or a probability model for entropy encoding, and selecting a quantization method and/or parameters of quantization; and the selector (830) is capable of performing the selection either according to predefined rules known at both encoder and decoder side, or a data for performing the selection is provided to the decoder side.

**10.** An apparatus for decoding an encoded image signal divided into a plurality of partitions, each partition having at least one pixel, the apparatus comprising:

a predictor (860) for predicting pixels of a partition based on the pixels of at least one other partition selected in accordance with a partition scan pattern;
a selector (870) for selecting for each partition prediction error a decoding method in accordance with the partition scan pattern;
a decoder (880) for decoding the partition prediction error accordingly; and
a reconstructor (890) for reconstructing the pixels of a partition based on the predicted partition and the decoded partition prediction error.

**11.** An apparatus according to claim 10 wherein the selector (830) is capable of at least of one of selecting whether inverse transformation is applied or not, selecting a type of inverse transformation, selecting a coding table or a probability model for entropy decoding, and selecting an inverse quantization method and/or parameters of inverse quantization; and the selector (830) is capable of performing the selection either according to predefined rules known at both encoder and decoder side, or according to data obtained from the encoder side.

**12.** An apparatus according to any of claims 8 to 11 wherein the image signal is divided into image blocks (600); an image block (600) is divided into a plurality of partitions (601-608); and the partition scan pattern defines the scan pattern of partitions within the image block (600).

**13.** An apparatus according to any of claims 8 to 12, wherein the selector (830, 860) is capable of selecting one coding method from a plurality of the predefined coding methods in accordance with a partition class; a partition class includes partitions being used for predicting a predefined number of other partitions, or partitions being used for predicting a predefined amount of pixels of other partitions, or partitions, for prediction of which a predefined number of other partitions is used.

**14.** A method according to any of claims 8 to 13, wherein

the selector (830, 860) is capable of performing the selection in accordance with pixel values of previously coded partitions.

15. A computer program product comprising a computer readable medium having a computer readable program code embodied thereon, the program code being adapted to carry out the method according to any of claims 1 to 7.

# Fig. 1

EP 2 216 998 A1

GRÜNECKER, KINKELDEY,
STOCKMAIR & SCHWANHÄUSSER

# Fig. 2

Post Filter Information

Input Signal → **Entropy Decoding** (290)

Quantized Prediction Error Signal

**inv. Quant. / inv. Transform** (220)

225 (+)

**Deblocking Filter** (230)

Reconstructed Signal

Decoded Signal

**Post Filter** (280) → Output Signal

Prediction Signal

**Memory** (240)

270 **Intra-Frame Prediction**

275

Intra / Inter

**Motion Comp. Prediction** (260) ← **Interpolation Filter** (250)

Motion Data

200

EP 2 216 998 A1

# Fig. 3

# Fig. 9

EP 2 216 998 A1

Fig. 4

(a)  (b)  (c)  (d)  (e)

401
402
403

410
420

EP 2 216 998 A1

# Fig. 5

EP 2 216 998 A1

Fig. 6

601
603
605
607

604

600

680

655

608

602

606

EP 2 216 998 A1

# Fig. 7

Fig. 8

Europäisches
Patentamt

European
Patent Office

Office européen
des brevets

# EUROPEAN SEARCH REPORT

Application Number

EP 09 00 1836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | LAROCHE G., JUNG J., PESQUET B.: "Intra prediction with 1D macroblock partitioning for image and video coding" PROCEEDINGS OF SPIE-IS&T ELECTRONIC IMAGING - VISUAL COMMUNICATIONS AND IMAGE PROCESSING 2009, vol. 7257, 20 January 2009 (2009-01-20), - 21 January 2009 (2009-01-21) pages 72570S-1-72570S-9, XP002541789 San Jose, CA * section 3 * * abstract * | 1-15 | INV. H04N7/26 |
| X | ZHU GANG ET AL: "The intra prediction based on sub block" SIGNAL PROCESSING, 2004. PROCEEDINGS. ICSP '04. 2004 7TH INTERNATIONAL CONFERENCE ON BEIJING, CHINA AUG. 31 - SEPT 4, 2004, PISCATAWAY, NJ, USA,IEEE, vol. 1, 31 August 2004 (2004-08-31), pages 467-469, XP010809662 ISBN: 978-0-7803-8406-4 | 1,3,8, 10,15 | |
| A | * section 2 * | 2,4-7,9, 11-14 | TECHNICAL FIELDS SEARCHED (IPC)   H04N |
| X | EP 1 956 847 A (MATSUSHITA ELECTRIC IND CO LTD [JP]) 13 August 2008 (2008-08-13) | 1,3,8, 10,15 | |
| A | * paragraphs [0021], [0054], [0100]; figure 11 * | 2,4-7,9, 11-14 | |
| D,A | MATTHIAS NARROSCHKE ET AL: "Extending H.264/AVC by an adaptive coding of the prediction error" 25. PICTURE CODING SYMPOSIUM;24-4-2006 - 26-4-2006; BEIJING,, 24 April 2006 (2006-04-24), XP030080297 * the whole document * | 1-15 | |

-/--

The present search report has been drawn up for all claims

| Place of search | Date of completion of the search | Examiner |
|---|---|---|
| The Hague | 2 September 2009 | Mayer, Claudia |

EPO FORM 1503 03.82 (P04C01)

Europäisches
Patentamt

European
Patent Office

Office européen
des brevets

# EUROPEAN SEARCH REPORT

Application Number

EP 09 00 1836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 531 041 A (MATSUSHITA ELECTRIC IND CO LTD [JP]) 10 March 1993 (1993-03-10) * page 3, line 52 * * page 4, lines 6-10 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 2 September 2009 | Mayer, Claudia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 00 1836

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2009

| Patent document cited in search report | | Publication date | Patent family member(s) | | Publication date |
|---|---|---|---|---|---|
| EP 1956847 | A | 13-08-2008 | CN | 101292537 A | 22-10-2008 |
| | | | WO | 2007055158 A1 | 18-05-2007 |
| | | | US | 2009122864 A1 | 14-05-2009 |
| EP 0531041 | A | 10-03-1993 | JP | 2507204 B2 | 12-06-1996 |
| | | | JP | 5063988 A | 12-03-1993 |
| | | | US | 5260782 A | 09-11-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. Laroche ; J. Jung ; B. Pesquet.** Intra Prediction with 1D macroblock partitioning for image and video coding. *Proc. of SPIE Visual Communications and Image Processing (VCIP 2009),* January 2009

- **M. Narroschke.** Extending H.264/AVC by an adaptive coding of the prediction error. *Proceeding of Picture Coding Symposium,* April 2006
- **Thomas Wedi ; Steffen Wittmann.** Quantization offsets for Video Coding. *Proc. of ISCAS,* 2005